# EUROPEAN PATENT APPLICATION

(11) **EP 2 106 088 A1**
(43) Date of publication of application: **30.09.2009**
(21) Application number: 07846120.9
(22) Date of filing: 21.12.2007
(51) Int. Cl.: H04L 29/06

(54) **A PACKET SERVICE METHOD AND A NETWORK DEVICE**

(30) Priority: 30.12.2006 CN 200610172795
(71) Applicant: Huawei Technologies Co., Ltd., Shenzhen, Guangdong Province 518129 (CN)
(72) Inventor: SHI, Youzhu, Shenzhen Guangdong 518129 (CN); MAO, Lingzhi, Shenzhen Guangdong 518129 (CN); ZHOU, Qing, Shenzhen Guangdong 518129 (CN)
(74) Representative: Körber, Martin Hans
(86) International application number: PCT/CN2007/071294
(87) International publication number: WO 2008/080340

(57) **Abstract**

A packet service network device includes a session control unit, adapted to connect a user group via a session initiation protocol (SIP), acquire user group information, and transmit the user group information via the SIP protocol; and a service control unit, adapted to receive the user group information sent from the session control unit, and perform group service processing according to the user group information. The present further provides a packet service method including: performing a session control via an SIP protocol, and acquiring user group information; and performing group service processing according to the user group information. In the present disclosure, the group service can be implemented on a next generation network (NGN).

## Description

The application claims the benefit of priority to Chinese Patent Application No. 200610172795.X, filed on Dec. 30, 2006, and entitled "PACKET SERVICE METHOD AND NETWORK DEVICE", which is incorporated herein by reference in its entirety.

### FIELD OF THE TECHNOLOGY

The present disclosure relates to the field of telecommunication, in particular to a packet service method and a network device thereof.

### BACKGROUND

As the packet technology becomes increasingly mature, the conventional circuit switching-based telecommunication network develops towards the packet switching-based broadband telecommunication network, and it is one of the current technical developing trends to use a session initiation protocol (SIP) as a call control signaling of the packet telecommunication core network. For example, in the researches on the next generation network (NGN) by International Telecommunication Union-Telecom Standardization (ITU-T) and European Telecommunications Standards Institute (ETS), the two standardization organizations currently both adopt the IP multimedia subsystem (IMS) network architecture defined by the third generation partnership project (3GPP) standardization organization as the core network of the NGN. The definition and description of the IMS network can be found in relevant standardization documents of the 3GPP, and the details will not be described herein again.

Recently, it is planed to add a type of new service into a next generation network (NGN) service. This type of service is, for example, a private branch exchange (PBX), a virtual network service (Centrex), a closed user group (CUG), a virtual private network (VPN), and a subaddressing (SUB) service, provided for a group formed by users with the same attributes.

In the telecommunications and Internet converged services and protocols for advanced networking (TISPAN), some work items (WIs) are built to study the group services in the services, such as the CUG and the SUB service.

However, currently, the method for realizing the group services has not been proposed yet. That is, in the prior art, the user group information cannot be transmitted in the NGN via the packet network, and thus the group service cannot be implemented.

### SUMMARY

The technical problems to be solved of the embodiments in the present disclosure is to provide a packet service network device and a method thereof, capable of realizing a group service in an NGN.

In order to solve the above problem, an embodiment of the present disclosure provides a packet service network device including a session control unit and a service control unit, in which:
the session control unit is adapted to connect a user group via an SIP, acquire user group information, and transmit the user group information via the SIP protocol; and
the service control unit is adapted to receive the user group information sent from the session control unit, and perform group service processing according to the user group information.

In order to solve the above problem, an embodiment of the present disclosure provides a packet service method, including:
performing a session control via a session initiation protocol (SIP), and acquiring user group information; and
performing group service processing according to the user group information.

It can be seen from the above technical solutions that, the embodiments of the present disclosure adopt the SIP protocol to transmit the user group information and other messages, perform the group service processing, and moreover, constitute an architecture for realizing the group service by adopting the session control unit and the service control unit on the hardware, thereby well solving the problem of realizing the group service in the NGN network.

### BRIEF DESCRIPTION OF THE DRAWINGS

FIG. 1 is a structural view of a packet service network device according to a first embodiment of the present disclosure;

FIG. 2 is a structural view of a packet service network device according to a second embodiment of the present disclosure;

FIG. 3 is a structural view of a packet service network device according to a third embodiment of the present disclosure; and

FIG. 4 is a flow chart of a packet service method according to an embodiment of the present disclosure.

### DETAILED DESCRIPTION

In embodiments of the present disclosure, the transmission of user group information and the session control thereof are performed via an SIP protocol, and service control is performed according to the user group information so as to implement a group service that is unavailable in the prior art.

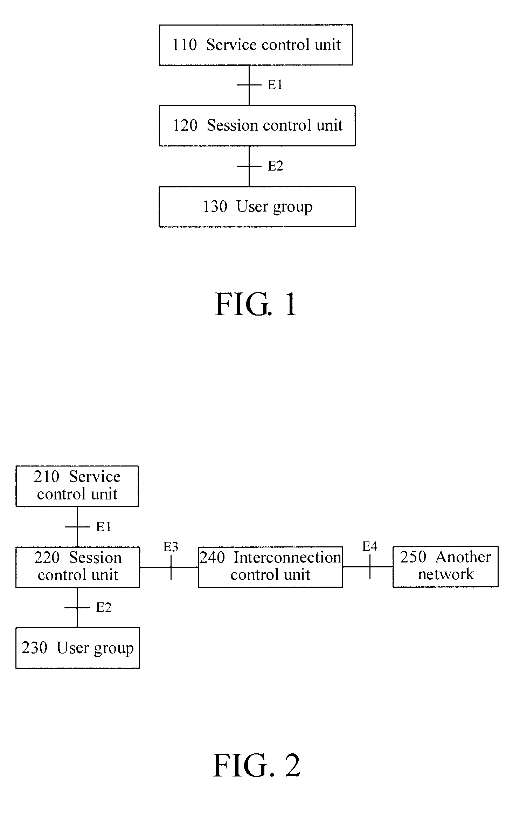

Referring to FIG 1, a packet service network device according to a first embodiment of the present disclosure includes a session control unit 120 and a service control unit 110. The session control unit 120 is adapted to connect a user group 130 via an SIP protocol, acquire user group information, and transmit the user group information via the SIP protocol. The service control unit 110 is adapted to perform group service processing according to the user group information received from the session control unit 120.

In embodiments of the present disclosure, the user group information and other messages are transmitted via the SIP protocol in a packet network, and architecture for realizing the group service is constituted by the session control unit 120 and the service control unit 110, thereby well solving the problem of realizing the group service in the NGN network. In the embodiments of the present disclosure, it is also possible to implement the group service in an IMS network, the group service when the IMS network and other IMS networks are interconnected, and the group service when the IMS network and a non-IMS network are interconnected.

More embodiments of the packet service network device according to the present disclosure are provided below, and these embodiments alone may form an independent technical solution, or may be randomly combined with one another into different technical solutions. These embodiments are based on the above first embodiment.

Referring to FIG 1 again, a packet service network device according to a second embodiment of the present disclosure includes a session control unit 120 and a service control unit 110.

The session control unit 120 is adapted to connect a user group 130 via an SIP protocol, and transmit user group information via the SIP protocol. In this embodiment, the session control unit 120 provides an IMS session routing function, i.e., a call session control function (CSCF). An E1 interface between the session control unit 120 and the service control unit 110 is based on the SIP protocol, and an E2 interface between the session control unit 120 and the user group 130 is also based on the SIP protocol. The E1 interface is an IMS service control (ISC) interface in the IMS network, and the E2 interface is a Gm interface in the IMS network.

The user group here is constituted by SIP user terminals in one group, that is, IP Centex users.

The group information includes basic group information and attached group information. The basic group information includes a group identity (ID), and in this embodiment, the group ID is a group number. The attached group information includes a byname, an authority, and a service attribute, etc., of the group.

In this embodiment, the group information takes as an example, but not limited to, calling user group information.

The session control unit 120 receives the user group information from the E1 interface, and transmits the user group information to the service control unit 110. The user group information is generated by the user group 130. The session control unit 120 receives the user group information from the E2 interface, and transmits the user group information to the service control unit 110. Meanwhile, the session control unit 120 inserts additional user group information into an SIP request transmitted to the service control unit 110.

The user group information is generated by the user group 130, that is, a CUG acquires its own group number and so on according to local configuration so as to form the group information.

The inserting the additional user group information into the SIP request transmitted to the service control unit 110 refers to inserting the additional user group information into a From/To header field of the SIP request transmitted to the service control unit 110.

Specifically, the byname, the authority, and the service attribute of the group are inserted into the SIP header field as follows:
From: Alice <sip:alice@atlanta.com>; byname=WINNER; tag=192830177

It represents that the byname of the group is WINNER.

The service control unit 110 is adapted to perform group service processing according to the user group information received from the session control unit 120. The service control unit 110 provides service logic control function for various services as a host execution environment for various NGN services. In this embodiment, the service control unit 110 is a CUG service control unit in the form of an independent entity.

The performing group service processing by the service control unit 110 means that the service control unit 110 executes service logic according to the user group information, i.e., limits the session of the users among different groups according to user subscription information.

In other embodiments, the service control unit may be specifically classified into different service control units according to different service types, for example, a PBX service control unit.

The service control unit may be integrated into the session control unit or the user group.

The session control unit may also provide functions such as IMS service triggering, for example, a proxy-call session control function (P-CSCF), a serving-call session control function (S-CSCF), and an interrogating-call session control function (I-CSCF). The E1 interface between the session control unit and the service control unit is based on the SIP protocol, and the E2 interface between the session control unit and the user group is also based on the SIP protocol.

The user group mentioned here may also be SIP user terminals in one group, for example, network access points (IP PBX users) in one group.

Referring to FIG. 2, in another embodiment of the present disclosure, the IMS network interconnected with a non-IMS network includes a service control unit 210 and a session control unit 220 connected to a user group 230, and further includes an interconnection control unit 240 connecting the session control unit 220 and another network 250 (i.e., the non-IMS network). The interconnection control unit 240 is adapted to complete a network interconnection control function. The interconnection control unit 240 may be a media gateway control function (MGCF) or an interconnection border control function (IBCF). An E3 interface between the interconnection control unit 240 and the session control unit 220 is based on the SIP protocol, and an E4 interface between the interconnection control unit 240 and the non-IMS network 250 is based on a protocol in the non-IMS network. For example, when the non-IMS network is a conventional circuit network, the E4 interface is based on an integrated services digital network (ISDN) user part (ISUP) protocol.

In this embodiment, the E3 interface is an Mg interface in the IMS network, and the E4 interface is a network-network interface (NNI).

When the IMS network and the other IMS network are interconnected, the interconnection control unit may still be introduced to realize the network interconnection control function, for example, an interconnection border control function (IBCF) in the NGN network. The E3 interface between the interconnection control unit and the session control unit is based on the SIP protocol, and the E4 interface between the interconnection control unit and the other IMS network is also based on the SIP protocol. Alternatively, the service control unit and the service control unit in the IMS network are interconnected via an E6 interface (not shown in figures) wi thout using the interconnection control unit. The E6 interface is based on the SIP protocol and is an Mw interface in the IMS network

In this embodiment of the present disclosure, the user group information is transmitted and the service control and routing are performed by adopting the SIP protocol specifically as follows:

The session control unit transmits the user group information to the service control unit or receives the control and message from the service control unit via the E1 interface;

The session control unit and the user group are connected via the E2 interface, and the service control unit may communicate with the service control unit in the other packet service network device via the E6 interface;

The IMS network interconnected with the other IMS network acquires the user group information via the E3 interface;

When the other network is a non-IMS network, the user group information is converted by adopting the interconnection control unit.

The user group information includes group information and/or extension information.

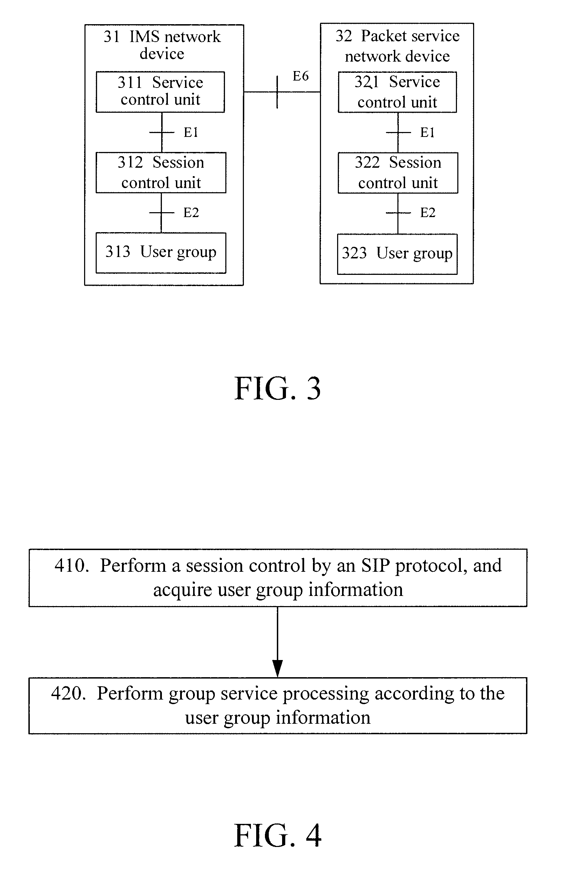

Referring to FIG. 3, in another embodiment of the present disclosure, the IMS network device 31 includes a service control unit 311, a session control unit 312, and a user group 313. The session control unit 312 is connected to the service control unit 311 and the user group 313 respectively. The packet service network device 32 includes a service control unit 321, a session control unit 322, and a user group 323. The session control unit 322 is connected to the service control unit 321 and the user group 323 respectively. The service control unit 311 in the IMS network device 31 is connected to the service control unit 321 in the packet service network device 32 via the E6 interface. The E6 interface is based on the SIP protocol.

In the above embodiment, the group information includes basic group information and attached group information. The basic group information includes a group ID, which may be a group number (numeral) or a domain name (for example, huawei.com).

The group ID is also applicable to the group routing in the network. The group ID may be a group pilot ID (for example, a group pilot number), or may also be a uniform resource identifier (URI) of any form. The network can find the corresponding group through the group pilot ID.

The attached group information includes the byname, authority, and service attribute, etc., of the group.

The extension information includes basic extension information and attached extension information. The basic extension information includes an extension ID, and the user terminals in the group can be positioned according to the extension ID, for example, an extension number of the IP PBX service, and a subaddress of the SUB service. The extension ID may be a string (numeral and/or letter, and generally in the form of a number or a user name, for example, 8008 or mary).

The attached extension information includes the byname, authority, and service attribute, etc., of the extension.

During a calling process, the user group information may also be divided into calling user group information and called user group information.

The session control unit transmits the user group information to the service control unit by using the following two methods.

In method 1, the session control unit transmits the user group information.

The session control unit may receive the user group information via the E1, E2, E3, and E6 interfaces, and transmits the user group information to the service control unit. One of the following circumstances may occur.

1) The user group information is generated by the service control unit, then received by the session control unit via the E1 interface, and transmitted to the user group.

2) The user group information is generated by the user group, then received by the session control unit via the E2 interface, and transmitted to the service control unit.

3) The user group information is generated by the non-IMS network, then received by the session control unit via the E3 interface, and transmitted to the service control unit. Under this circumstance, the interconnection control unit needs to complete protocol conversion of the user group information between the protocol in the non-IMS network and the SIP protocol in the IMS network.

4) The user group information is generated by another IMS network, then received by the session control unit via the E3 or the E6 interface, and transmitted to the service control unit.

5) The user group information is generated by the session control unit, then sent to the user group and the peer end network (the IMS network or the non-IMS network), carried in a session message initiated by the user group or the peer end network, and further transmitted by the session control unit to the service control unit.

In method 2, the session control unit inserts the user group information.

The inserting the user group information by the session control unit includes the following circumstances.

1) The user group information is generated by the session control unit, then inserted into the SIP request, and transmitted to the service control unit.

2) The user group information is generated by the service control unit, the user group, or the peer end network (the IMS network or the non-IMS network), then sent to the session control unit, saved by the session control unit, and further inserted into a subsequent SIP request by the session control unit.

The above method 1 and method 2 may be used at the same time. For example, the session control unit transmits the user group information to the service control unit according to method 1, and meanwhile inserts the additional user group information according to method 2.

Method 1 and method 2 may be selectively used. For example, the session control unit checks whether the user group information received via the E1, E2, E3, and E6 interfaces is correct or not, and if the user group information is correct, the session control unit transmits the user group information to the service control unit; otherwise, the session control unit inserts the user group information generated by itself and transmits the user group information to the service control unit.

In the above mentioned methods 1 and 2, the method for generating the user group information includes the following steps:

1) The user group information is acquired through a third party node. For example, the user group information is acquired through a home subscriber server (HSS) or an application server (AS). The acquisition may be performed when the user group initiates the registration, the third party registers, or the session is initiated.

2) The user group information is acquired according to local configuration, for example, the group number is configured by a CUG group user.

The group service includes, for example, the PBX, Centrex, CUG, VPN, or SUB service.

Further, in an embodiment of the present disclosure, a method for transmitting user group information in an SIP message via the E1, E2, E3, and E6 interfaces is also provided. In order to transmit the user group information in the SIP message, the following methods may be adopted.

1) The user group information is transmitted in the SIP header field, for example, in the From/To header field of the SIP message as well as other existing or extended header fields.

2) The user group information is transmitted in an extended header field of the Request-URI.

3) The user group information is transmitted in a parameter of the Request-URI.

4) The user group information is transmitted in an extended parameter of the SIP URI or TEL URI, and the SIP URI/TEL URI may be transmitted in a plurality of header fields, for example, in an additional identity (P-Asserted-Identity).

For example, in order to transmit the extension ID in the user group information, the following methods may be employed.

1) The extension ID is transmitted in the SIP header field. The extension ID may be the user name or the number, and may be a calling extension ID or a called extension ID. For example:
From: Huawei <sip:Huawei@chinatelcom.com>; extension=marry; tag=1928301774
extension=marry is inserted into the From header field, indicating that the extension ID of the calling user is marry.
From: tel:28780808; extension=86655; tag=1928301774
extension=86655 is inserted into the From header field, indicating that the extension ID of the calling user is 86655.
To: Huawei <sip:Huawei@chinatelcom.com>; extension=alice; tag=1232131828
extension=alice is inserted into the To header field, indicating that the extension ID of the called user is alice.
To: tel:28780808; extension=23165; tag=1232131828
extension=23165 is inserted into the To header field, indicating that the extension ID of the called user is 23165.

2) The extension ID is transmitted in the SIP URI. The extension ID may be the user name or the number, and may be the calling extension ID or the called extension ID. For example:
SIP: PBX_examplel@chinatelecom.com; group_usemame="mary"
group_usemame="mary" is inserted into the SIP URI, indicating that the extension ID is marry.
SIP: PBX_example1@chinatelecom.com; group_userid=86655
group_userid=86655 is inserted into the SIP URI, indicating that the extension ID is 86655.

The above SIP URI may be transmitted in the P-Asserted-Identity header field to indicate the calling or the called extension ID; transmitted in the RequestURI header field to indicate the called extension ID; transmitted in the From header field to indicate the calling extension ID; or transmitted in the To header field to indicate the called extension ID.

3) The extension ID is transmitted in the TEL URI. The extension ID may be the user name or the number, and may be the calling extension ID or the called extension ID. For example:
TEL: 28780808; group_username="mary"
group_username="mary" is inserted into the TEL URI, indicating that the extension ID is marry.
TEL: 28780808; group_userid=86655
group_userid=86655 is inserted into the TEL URI, indicating that the extension ID is 86655.

The above TEL URI may be transmitted in the P-Asserted-Identity header field to indicate the calling or the called extension ID; transmitted in the RequestURI header field to indicate the called extension ID; transmitted in the From header field to indicate the calling extension ID; or transmitted in the To header field to indicate the called extension ID.

For example, in order to transmit the group ID in the user group information, the following methods may be adopted.

1) The group ID is transmitted in the SIP header field. The group ID may be the domain name or the group number, and may be the calling group ID or the called group ID. For example:
From: Alice <sip:alice@atlanta.com>; group=Huawei.com; tag=1928301774
group=Huawei.com is inserted into the From header field, indicating that the group ID of the calling user is Huawei.com.
From: tel:28786655; group=10088; tag=1928301774
group=10088 is inserted into the From header field, indicating that the group ID of the calling user is 10088.
To: Alice <sip:alice@atlanta.com>; group=PITT.com; tag=1232131828
group=PITT.com is inserted into the To header field, indicating that the group ID of the called user is PITT.com.
To: tel:28789155; group=168; tag=1232131828
group=168 is inserted into the To header field, indicating that the group ID of the called user is 168.

2) The group ID is transmitted in the SIP URI. The group ID may be the domain name or the group number, and may be the calling group ID or the called group ID. For example,
SIP: alice@atlanta.com; group_name="Huawei.com"
group_name="Huawei.com" is inserted into the SIP URI, indicating that the group ID is Huawei.com.
SIP: alice@atlanta.com; group_id=168
group_id=168 is inserted into the SIP URI, indicating that the group ID is 168.

The above SIP URI may be transmitted in the P-Asserted-Identity header field to indicate the calling or the called group ID; transmitted in the RequestURI header field to indicate the called group ID; transmitted in the From header field to indicate the calling group ID; or transmitted in the To header field to indicate the called group ID.

3) The group ID is transmitted in the TEL URI. The group ID may be the domain name or the group number, and may be the calling group ID or the called group ID. For example:
TEL: 28785566; group_name="Huawei.com"
group_name="Huawei.com" is inserted into the TEL URI, indicating that the group ID is Huawei.com.
TEL: 28788178; group_id=168
group_id=168 is inserted into the TEL URI, indicating that the group ID is 168.

The TEL URI may be transmitted in the P-Asserted-Identity header field to indicate the calling or the called group ID; transmitted in the RequestURI header field to indicate the called group ID; transmitted in the From header field to indicate the calling group ID; or transmitted in the To header field to indicate the called group ID.

For example, in order to transmit the group pilot number in the user group information, the following methods may be employed.

The group pilot number in the user group information is transmitted in the RequestURI, and may be in the format of a TEL URI or SIP URI. For example:
INVITE SIP: PBX_example1@chinatelecom.com, in which SIP: PBX_example1@chinatelecom.com is the group pilot number in the SIP URI format.
INVITE TEL: 28780808, in which TEL: 28780808 is the group pilot number in the TEL URI format.

For example, in order to transmit the attached group information or the attached extension information in the user group information, the following methods may be adopted.
SIP: alice@atlanta.com; group_name="Huawei.com"; group_alias="h3com"
group_ alias ="h3com" is inserted into the SIP URI, indicating that the byname of the group is h3com.
From: tel:28785566; group=2222; policy=intra-group&inter-group; tag=1928301774
policy=intra-group&inter-group is inserted into the From header field, indicating that the calling user has the calling authority in and out of the group.

According to different service types, the service control unit 110 in FIG 1 performs the group service processing according to the user group information received from the session control unit 120 by using at least one of the following methods.

Routing is performed according to the user group information, for example, the call is routed to the corresponding PBX user group according to the group pilot number.

The user group information is converted, for example, the group ID and the extension ID are converted into practical IDs of the user group.

Service logic is executed according to the user group information, for example, the sessions of the users among different groups are limited according to user subscription information.

Referring to FIG. 4, a packet service method according to the embodiment of the present disclosure includes the following steps.

In 410, the session control is performed via the SIP protocol, and the user group information is acquired.

In 420, the group service processing is performed according to the user group information.

The method for realizing the group service by transmitting the user group information in the packet network is further illustrated in detail below with more specific embodiments.

In Embodiment 1, the PBX group user serves as the called user.

The method includes the following steps.

1) A calling user A initiates a calling request to call a PBX group user B.

In this step, the session control is performed via the SIP protocol, and the user group information is acquired.

The calling user A may be located in the conventional circuit network or the IMS network.

When the calling user A is located in the conventional circuit network, the group pilot ID of the PBX group user may be carried in the called number of the calling request, for example, the group pilot number 28780808. The conventional circuit network sends an initial address message (IAM) of the ISUP protocol to the MGCF, and the group pilot number 28780808 is carried in the message. The MGCF converts the IAM message into an SIP INVITE message, the group pilot ID of the PBX group user is carried in the RequestURI parameter, and the RequestURI is TEL: 28780808. The SIP INVITE request message is forwarded to the session control unit where the PBX group user B is located.

The extension information of the PBX group user B, for example, the calling group pilot number is 28780808 and the SUB=002, may be further carried in the above calling request. The conventional circuit network sends the IAM of the ISUP protocol to the MGCF, and the information of the group pilot number 28780808 and the SUB=002 is carried in the message. The MGCF converts the IAM message into the SIP INVITE message, the group pilot ID of the PBX group user is carried in the RequestURI parameter, and the RequestURI is TEL: 28780808, sub=002. The SIP INVITE request message is forwarded to the session control unit where the PBX group user B is located.

When the calling user A is located in the IMS network, the group pilot ID of the PBX group user may be carried in the RequestURI parameter of the SIP calling request INVITE message, and the RequestURI is SIP: PBX_example1@chinatelecom.com. The SIP INVITE request message is forwarded to the session control unit where the PBX group user B is located.

The extension information, the attached group information, and the attached extension information of the PBX group user B may be further carried in the INVITE message, for example, SIP: PBX_example1@chinatelecom.com; group_alias="huawei"; group_userid="mary", indicating that the PBX group user B is called, the group pilot ID thereof is SIP: PBX_example1@chinatelecom.com, the byname of the group is huawei, the extension ID in the group is mary", and the SIP INVITE request is forwarded to the session control unit where the PBX group user B is located.

The session control unit forwards the SIP INVITE message to the service control unit of the PBX group.

2) The service control unit of the PBX group receives the calling request, and implements the PBX group service according to the user group information.

In this step, the group service processing is performed according to the user group information.

When the service control unit of the PBX group receives the INVITE calling request, the group information, for example, the RequestURI: TEL: 28780808 or SIP: PBX_example1@chinatelecom.com, is carried in the calling request. The service control unit of the PBX group routes the calling request to the corresponding user group so as to complete the call routing.

The service control unit of the PBX group may convert the group pilot ID into a user ID of the PBX group, and routes the calling request to the corresponding user group through the session control unit so as to complete the call routing.

The user group may provide a voice prompt or other information for the calling user, and the calling user A performs the next step, for example, inputting the extension ID.

When the service control unit of the PBX group receives the INVITE calling request, the group information and the extension information, for example, the RequestURL: TEL: 28780808, sub=002; or SIP: PBX_example1@chinatelecom.com; group_alias="huawei"; group_userid="mary", are carried in the calling request. The service control unit of the PBX group may route the calling request to an inlet user group of the PBX group. The inlet user group of the PBX group may further route the calling request to the called extension user B according to the extension information in the SIP INVITE request.

The service control unit of the PBX group may also convert the group pilot ID into the user ID of the PBX group, and routes the calling request to the inlet user group of the PBX group through session control unit. The inlet user group of the PBX group may further route the calling request to the called extension user B according to the extension information in the SIP INVITE request.

The service control unit of the PBX group may also convert the group pilot ID and the extension ID into the user ID of the PBX group user B, and route the calling request to the PBX group user B through the session control unit.

In Embodiment 2, a CUG service is performed.

The method includes the following steps.

1) An IMS user A initiates a calling request to a called user B in the same CUG group.

When located in the IMS network, the calling user A initiates the calling request to call the CUG group user B, and a user ID of the called user B, for example, RequestURI of SIP: userB@chinatelecom.com, is carried in a RequestURI parameter of an SIP calling request INVITE message by the calling user A. The SIP INVITE request is forwarded to the session control unit where the calling user A is located.

The session control unit where the calling user A is located inserts the user group information of the calling user A into the SIP INVITE request, for example, inserts SIP: userA@chinatelecom.com, groupid=2222 into the P-Asserted-Identity header field, indicating that the group ID of the calling user A is 2222. The session control unit may acquire the user group information of the calling user A through the above-mentioned method, for example, by querying the HSS.

The session control unit forwards the SIP INVITE message to the service control unit of the CUG group of the calling user A.

2) The service control unit of the CUG group of the calling user A receives the calling request, and performs the CUG group service processing according to the user group information.

In this step, the group service processing is performed according to the user group information.

The service control unit of the CUG group of the calling user A receives the INVITE calling request, and may perform the corresponding CUG service processing according to the user group information. For example, the control unit checks whether the group information of the calling user A is correct or not, and if the group information of the calling user A is not correct, performs corresponding modifications; and checks whether the calling user A has the authority for calling the called user B.

The service control unit of the CUG group may further insert the user group information into the INVITE calling request, for example, inserts SIP: userA@chinatelecom.com, groupid=2222, and policy=intra-group&inter-group into the P-Asserted-Identity header field, indicating that the calling user A has the calling authority in and out of the group.

The service control unit of the CUG group of the calling user A forwards the SIP INVITE request to the network where the called user B is located.

When the called user B is located in the conventional circuit network, the ID information of the called user needs to be denoted by the TEL URI.

3) The called network receives the calling request, and forwards the calling request to the service control unit of the CUG.

When the called user B is located in the conventional circuit network, the above SIP INVITE calling request is routed to the MGCF. The MGCF completes the conversion from the SIP protocol to the ISUP message, then converts the user group information in the SIP INVITE calling request, and sends the converted information to the conventional circuit network. The conventional circuit network thus implements the CUG service according to the user group information.

When the called user B is located in the IMS network, the SIP INVITE calling request is routed to the session control unit where the called user B is located. The session control unit where the called user B is located may insert the user group information of the called user B into the SIP INVITE request, for example, inserts SIP: userB@chinatelecom.com, groupid=2222 into the RequestURI header field, indicating that the group ID of the called user B is 2222. The session control unit may acquire the user group information of the called user B through the above-mentioned methods, for example, by querying the HSS.

The session control unit forwards the SIP INVITE message to the service control unit of the CUG group of the called user B.

4) The service control unit of the CUG group of the called user B receives the calling request, and implements the CUG group service according to the user group information.

The service control unit of the CUG group of the called user B receives the INVITE calling request, and implements the corresponding CUG service according to the user group information.

For example, the service control unit of the CUG group acquires that the group ID of the calling user is 222 and the calling user A has the calling authority in and out of the group according to SIP: userA@chinatelecom.com, groupid=2222, policy=intra-group&inter-group in the P-Asserted-Identity header field. The service control unit of the CUG group acquires that the group ID of the called user is 2222, the calling user A and the called user B are in the same CUG group, and the calling user has the calling authority in the group according to SIP: userB@chinatelecom.com, groupid=2222 in the RequestURI header field, so that if the called user B has the calling authority in the group, the call of this time is allowed to be connected, and if the called user B does not have the calling authority in the group, the call of this time is limited.

Seen from the above, the user group information and other messages are transmitted and the group service processed is performed by adopting the SIP protocol, and an architecture for realizing the group service is constituted by the session control unit and the service control unit on the hardware, thereby well solving the problem of realizing the group service in the NGN network. In the embodiments of the present disclosure, the group service in the IMS network, the group service when the IMS network and the other IMS network are interconnected, and the group service when the IMS network and the non-IMS network are interconnected can be realized.

A detailed description of the packet service method and the network device thereof provided by the present disclosure is given above. The principle and implementation of the disclosure are illustrated with specific examples, which help to understand the method and the idea of the present disclosure. It will be apparent to those skilled in the art that various modifications and variations can be made to the present disclosure without departing from the scope or spirit of the disclosure. In view of the foregoing, it is intended that the present disclosure cover modifications and variations of this disclosure provided that they fall within the scope of the following claims and their equivalents.

## Claims

1. A packet service network device, comprising:
a session control unit, adapted to connect to a user group via a session initiation protocol, SIP, acquire user group information, and transmit the user group information via the SIP protocol; and
a service control unit, adapted to receive the user group information sent by the session control unit, and perform group service processing according to the user group information.

2. The packet service network device according to claim 1, wherein the session control unit adapted to transmit the user group information via the SIP protocol refers to the session control unit adapted to transmit any one of the following user group information:
user group information inserted into an SIP header field;
user group information inserted into an extension of a request uniform resource identifier, Request-URI; and
user group information inserted into a parameter of the Request-URI.

3. The packet service network device according to claim 1 or 2, wherein the session control unit adapted to transmit the user group information via the SIP protocol refers to the session control unit adapted to transmit user group information inserted in an extended parameter of an SIP URI or a telephone URI, TEL URI.

4. The packet service network device according to claim 2, wherein the SIP header field comprises at least one of the following: a From header field, a To header field, and an additional identity, P-AssertedIdentity, header field.

5. The packet service network device according to claim 1, further comprising an interconnection control unit, wherein:
the interconnection control unit is coupled to the session control unit or an IP multimedia subsystem, IMS, network respectively, and is adapted to transmit the received user group information; and
the interconnection control unit is coupled to a non-IMS network, and is adapted to convert user group information coming from the non-IMS network from a non-SIP protocol into the SIP protocol, and send the converted user group information.

6. The packet service network device according to claim 5, wherein the interconnection control unit is a media gateway control function, MGC F, or an interconnection border control function, IBCF.

7. The packet service network device according to claim 1, wherein the service control unit is further connected to service control units of other packet service network devices via the SIP protocol, and is adapted to perform group service processing according to the user group information generated by the service control units of the other packet service network devices.

8. The packet service network device according to claim 1, wherein the service control unit is integrated into the session control unit or the user group.

9. The packet service network device according to claim 1, wherein the session control unit adapted to connect the user group via the SIP protocol refers to the session control unit adapted to connect user terminals or network access points of the user group via the SIP protocol.

10. The packet service network device according to claim 1, wherein the group service is a private branch exchange, PBX, a virtual network service, Centrex, a closed user group, CUG, a virtual private network, VPN, or a subaddressing, SUB, service.

11. The packet service network device according to any one of claims 1 to 10, wherein the user group information comprises group information and/or extension information.

12. A packet service method, comprising:
performing a session control via a session initiation protocol, SIP,
acquiring user group information; and
performing group service processing according to the user group information.

13. The method according to claim 12, wherein the performing a session with the user group via the SIP, and acquiring the user group information comprises: inserting the user group information into an SIP request in at least one of the following manners:
inserting the user group information into an SIP header field;
inserting the user group information into an extension header field in a request uniform resource identifier (Request-URI); and
inserting the user group information into a parameter of the Request-URI.

14. The method according to claim 12 or 13, wherein the performing a session with the user group via the SIP, and acquiring the user group information comprises: inserting the user group information into an SIP request in at least one of the following manners:
inserting the user group information into an extended parameter of an SIP URI or an extended parameter of a telephone URI, TEL URI.

15. The method according to claim 13, wherein the inserting the user group information into the SIP header field comprises: inserting the user group information into a From header field, a To header field, or a P-AssertedIdentity header field.

16. The method according to claim 12, wherein the acquiring the user group information comprises at least one of:
acquiring the user group information generated during the session control;
acquiring the user group information generated by the user group and transmitted during the session control; and
acquiring the user group information generated by a non-IMS network, transmitted during the session control, and converted from a non-SIP protocol to the SIP protocol.

17. The method according to claim 16, wherein the user group information is generated in one of the following manners:
acquiring the user group information through a third party node when the user group initiates an registration, a third party registers, or a session is initiated, and acquiring the user group information according to local configuration.

18. The method according to claim 12, wherein the group service processing at least comprises one of:
routing according to the user group information;
converting the user group information; and
executing service logic according to the user group information.
